# EUROPÄISCHE PATENTANMELDUNG

(11) **EP 4 148 972 A1**
(43) Veröffentlichungstag der Anmeldung: **15.03.2023**
(21) Anmeldenummer: 21196262.6
(22) Anmeldetag: 13.09.2021
(51) Int. Cl.: H02P 6/185, H02P 6/182, H02P 6/18

(54) **VERFAHREN ZUM GEBERLOSEN ERMITTELN EINER DREHWINKELSTELLUNG EINES ROTORS EINES BÜRSTENLOSEN GLEICHSTROMMOTORS UND HANDGETRAGENES WERKZEUG**

(71) Anmelder: Andreas Stihl AG & Co. KG, 71336 Waiblingen (DE)
(72) Erfinder: Braun, Jan Lukas, 71334 Waiblingen (DE); Dietrich, Simon, 71336 Waiblingen (DE); Robrecht, Maximilian, 70736 Fellbach (DE)
(74) Vertreter: Patentanwälte Ruff, Wilhelm, Beier, Dauster & Partner mbB

(57) **Zusammenfassung**

Verfahren zum geberlosen Ermitteln einer Drehwinkelstellung (DW) eines Rotors (3) eines bürstenlosen Gleichstrommotors (2), mit den Schritten:
- Erfassen einer in einem Stator (4) des bürstenlosen Gleichstrommotors (2) induzierten Spannung,
- Prüfen, ob die im Stator (4) induzierte Spannung kleiner ist als ein Schwellenwert, und
- falls die induzierte Spannung kleiner ist als der Schwellenwert:
- Ermitteln einer initialen Drehwinkelstellung (DW) des Rotors (3) basierend auf einer Indirekten Flussermittlung durch Online Reaktanz Messung (INFORM), und
- anschließendes Nachführen der Drehwinkelstellung (DW) ausgehend von der berechneten initialen Drehwinkelstellung (DW) unter Verwendung mindestens eines kontinuierlichen Testsignals (utu, utv, utw).

## Beschreibung

Die Erfindung betrifft ein Verfahren zum geberlosen Ermitteln einer Drehwinkelstellung eines Rotors eines bürstenlosen Gleichstrommotors und ein handgetragenes Werkzeug.

Der Erfindung liegt die Aufgabe zugrunde, ein Verfahren zum geberlosen Ermitteln einer Drehwinkelstellung eines Rotors eines bürstenlosen Gleichstrommotors und ein handgetragenes Werkzeug zur Verfügung zu stellen, die zuverlässig, möglichst verzögerungsfrei und geräuscharm die Drehwinkelstellung des Rotors bestimmen können.

Das erfindungsgemäße Verfahren dient zum geberlosen Ermitteln einer Drehwinkelstellung eines Rotors eines bürstenlosen Gleichstrommotors, insbesondere ausgehend von einer unbekannten Drehwinkelstellung des Rotors und insbesondere ausgehend von einer Drehzahl größer Null.

Das Verfahren weist folgende Schritt auf.

In einem ersten Schritt des Verfahrens wird herkömmlich eine in einem Stator des bürstenlosen Gleichstrommotors induzierten (Gegen-) Spannung erfasst bzw. gemessen.

Anschließend wird geprüft, ob die erfasste bzw. gemessene Spannung kleiner ist als ein, beispielsweise empirisch ermittelter oder berechneter, Schwellenwert.

Falls die induzierte Spannung kleiner ist als der Schwellenwert, wird eine anfängliche bzw. initiale Drehwinkelstellung des Rotors basierend auf einer Indirekten Flussermittlung durch Online Reaktanz Messung (INFORM) ermittelt bzw. berechnet. Beim INFORM Verfahren werden mindestens zwei linear unabhängige Spannungspulse eingeprägt, wobei die Drehwinkelstellung des Rotors bzw. die Rotorposition aus der Stromantwort errechnet wird. Im Übrigen sei bezüglich dieses an sich bekannten Verfahrens auch auf die einschlägige Fachliteratur verwiesen. Der Vorteil des INFORM Verfahrens ist die sehr schnelle Ermittlung der anfänglichen bzw. initialen Drehwinkelstellung des Rotors bzw. absoluten Rotorlage bereits nach wenigen Testpulsen. Da die verwendeten Testpulse jedoch linear unabhängig sein müssen (typischerweise werden zwei 90° oder drei 120° zueinander versetzte Pulse verwendet), entsteht immer auch eine Stromantwort in Richtung der q-Achse. Bei Berücksichtigung einer maximalen Motorstromamplitude muss der momentbildende Strom um den durch das Testsignal erzeugten Strom reduziert werden.

Nach dem Berechnen der initialen Drehwinkelstellung wird die Drehwinkelstellung fortlaufend, gegebenenfalls bis zum Erreichen einer Schwellendrehzahl, ausgehend von der berechneten initialen Drehwinkelstellung unter Verwendung eines oder mehrerer kontinuierlicher Testsignale nachgeführt.

In einer Ausführungsform weist das Nachführen der Drehwinkelstellung ausgehend von der berechneten initialen Drehwinkelstellung unter Verwendung des mindestens einen kontinuierlichen Testsignals folgende Schritte auf: Einspeisen bzw. Einprägen von kontinuierlichen Testsignalen, insbesondere in Form von kontinuierlichen Testspannungen, in den Stator bzw. Statorwicklungen des bürstenlosen Gleichstrommotors, Ermitteln von Antwortsignalen, insbesondere in Form von Antwortströmen, die sich in Abhängigkeit von den Testsignalen einstellen, und Bestimmen der Drehwinkelstellung des Rotors in Abhängigkeit von den Testsignalen und den Antwortsignalen. Die kontinuierlichen Testsignale können beispielsweise drei kontinuierliche rechteckförmige oder sinusförmige Testspannungen sein, die an zugehörige Phasen eines dreiphasigen bürstenlosen Gleichstrommotors angelegt werden.

Das oder die Testsignale können kontinuierlich rotorsynchron oder nicht rotorsynchron eingespeist werden. Das oder die Testsignale kann/können in Richtung der d-Achse eingespeist werden, wodurch der momentbildende Q-Strom nur minimal reduziert werden muss, um eine gegebene maximale Stromamplitude nicht zu überschreiten. Das Einspeisen der Testsignale ist deutlich leiser als das initiale INFORM basierte Verfahren. Die Bestimmung der initialen Drehwinkelstellung des Rotors basierend auf den kontinuierlichen Testsignalen würde jedoch vergleichsweise lange dauern, so dass hierzu erfindungsgemäß das INFORM Verfahren eingesetzt wird. Weiter müsste initial bei der Verwendung von kontinuierlichen Testsignalen zur Unterscheidung zwischen der positiven und negativen d-Achse ein zusätzlicher Testpuls mit hoher Amplitude (Sättigungspuls) in Richtung der d-Achse eingeprägt werden, worauf aufgrund der Verwendung des INFORM Verfahrens verzichtet werden kann.

In einer Ausführungsform wird folgender Schritt durchgeführt, falls die induzierte Spannung gleich groß ist wie der Schwellenwert oder größer ist als der Schwellenwert: Berechnen der Drehwinkelstellung des Rotors in Abhängigkeit von der im Stator bzw. den Statorwicklungen induzierten (Gegen-) Spannung bzw. von im Stator bzw. den Statorwicklungen induzierten (Gegen-) Spannungen. Hinsichtlich der an sich bekannten Ermittlung der Drehwinkelstellung des Rotors basierend auf der oder den im Stator induzierten Gegenspannung(en) sei auch auf die einschlägige Fachliteratur verwiesen.

In einer Ausführungsform wird das Berechnen der Drehwinkelstellung des Rotors basierend auf der Indirekten Flussermittlung durch Online Reaktanz Messung (INFORM) und das Nachführen der Drehwinkelstellung ausgehend von der berechneten initialen Drehwinkelstellung unter Verwendung des mindestens einen Testsignals bis zu einer Schwellendrehzahl durchgeführt, wobei die Schwellendrehzahl in einem Bereich zwischen 18 % und 22 % der Nenndrehzahl bzw. Maximaldrehzahl des bürstenlosen Gleichstrommotors liegt.

Das handgetragene Werkzeug weist einen bürstenlosen Gleichstrommotor und eine Motorsteuervorrichtung zur Ansteuerung des bürstenlosen Gleichstrommotors auf, beispielsweise in Form einer Mikroprozessorsteuerung, wobei die Motorsteuervorrichtung dazu ausgebildet ist, das handgetragene Werkzeug derart zu steuern, dass ein oben beschriebenes Verfahren ausgeführt wird.

Die Erfindung wird nachfolgend unter Bezugnahme auf die Zeichnungen detailliert beschrieben. Hierbei zeigt:
- Fig. 1: höchst schematisch ein Blockschaltbild eines handgetragenen Werkzeugs in Form einer Motorkettensäge und
- Fig. 2: einen exemplarischen zeitlichen Verlauf von Signalen zum geberlosen Ermitteln einer Drehwinkelstellung eines Rotors eines bürstenlosen Gleichstrommotors des in Fig. 1 gezeigten handgetragenen Werkzeugs.

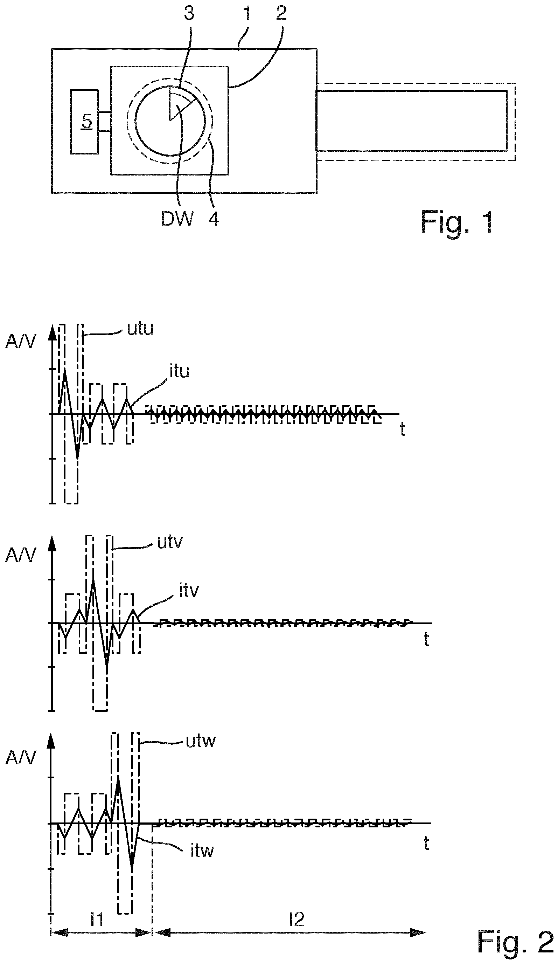

Fig. 1 zeigt höchst schematisch ein Blockschaltbild eines handgetragenen Werkzeugs 1 in Form einer Motorkettensäge.

Das handgetragene Werkzeug 1 weist einen herkömmlichen bürstenlosen dreiphasigen Gleichstrommotor 2 mit einem Rotor 3 und einem dreiphasigen Stator 4 auf. Insoweit sei auch auf die einschlägige Fachliteratur verwiesen.

Das handgetragene Werkzeug 1 weist weiter eine Motorsteuervorrichtung 5 zur Ansteuerung des bürstenlosen Gleichstrommotors 2 auf, wobei die Motorsteuervorrichtung 5 dazu ausgebildet ist, für die drei Phasen des Stators 4 geeignete Ansteuerspannungen zu erzeugen. Weiter sind geeignete, nicht näher dargestellte Spannungs- und Stromsensoren vorhanden, die zur Messung von Spannungen bzw. von Strömen in den/die drei Phasen des Stators 4 vorgesehen sind, wobei die gemessenen Spannungen bzw. Ströme von der Motorsteuervorrichtung 5 geeignet ausgewertet werden.

Die Motorsteuervorrichtung 5 ist dazu vorgesehen, eine Drehwinkelstellung DW des Rotors 3 des bürstenlosen Gleichstrommotors 2 geberlos zu ermitteln, was nachfolgend unter Bezugnahme auf Fig. 2 detailliert beschrieben wird.

Fig. 2 zeigt einen exemplarischen zeitlichen Verlauf von Testsignalen in Form von eingespeisten Testspannungen utu, utv, utw für jeweilige Phasen u, v bzw. w des Stators 4 und sich ergebende Antwort-Signale in Form von Phasen- bzw. Antwort-Strömen itu, itv und itw.

In einem Zeitintervall I1 erfasst die Motorsteuervorrichtung 5 mittels geeigneter Sensoren eine im Stator 4 des bürstenlosen Gleichstrommotors induzierte Spannung bzw. in Statorwicklungen des Stators 4 induzierte Spannungen. Die Motorsteuervorrichtung 5 prüft dann, ob die erfasste(n) Spannung(en) kleiner ist/sind als ein Schwellenwert. Falls die induzierte(n) Spannung(en) kleiner ist/sind als der Schwellenwert, was vorliegend exemplarisch der Fall ist, ermittelt die Motorsteuervorrichtung 5 eine initiale Drehwinkelstellung DW des Rotors 3 basierend auf einer an sich bekannten Indirekten Flussermittlung durch Online Reaktanz Messung (INFORM).

Im Zeitintervall l2, das auf das Zeitintervall l1 folgt, führt die Motorsteuervorrichtung 5 die Drehwinkelstellung DW ausgehend von der berechneten initialen Drehwinkelstellung DW unter Verwendung von drei kontinuierlichen Testsignalen in Form von Testspannungen utu, utv, utw, die in die Statorwicklungen eingespeist werden, nach. Hierzu werden Antwort-Signale bzw. Antwort-Ströme itu, itv, itw, die sich in Abhängigkeit von den Testsignalen bzw. Testspannungen utu, utv, utw einstellen, gemessen und die Motorsteuervorrichtung 5 berechnet die Drehwinkelstellung DW des Rotors 3 in Abhängigkeit von den Testsignalen bzw. Testspannungen utu, utv, utw und den gemessenen Antwort-Signalen bzw. Antwort-Strömen itu, itv, itw.

In Drehzahlbereich des bürstenlosen Gleichstrommotors 2 oberhalb einer Schwellendrehzahl wird die Drehwinkelstellung DW des Rotors 3 herkömmlich in Abhängigkeit von der im Stator 4 induzierten (Gegen-) Spannung berechnet. Der zweite Drehzahlbereich schließt sich in Fig. 2 an das Zeitintervall l2 an und ist nicht näher dargestellt.

## Patentansprüche

1. Verfahren zum geberlosen Ermitteln einer Drehwinkelstellung (DW) eines Rotors (3) eines bürstenlosen Gleichstrommotors (2), mit den Schritten:
- Erfassen einer in einem Stator (4) des bürstenlosen Gleichstrommotors (2) induzierten Spannung,
- Prüfen, ob die im Stator (4) induzierte Spannung kleiner ist als ein Schwellenwert, und
- falls die induzierte Spannung kleiner ist als der Schwellenwert:
- Ermitteln einer initialen Drehwinkelstellung (DW) des Rotors (3) basierend auf einer Indirekten Flussermittlung durch Online Reaktanz Messung (INFORM), und
- anschließendes Nachführen der Drehwinkelstellung (DW) ausgehend von der berechneten initialen Drehwinkelstellung (DW) unter Verwendung mindestens eines kontinuierlichen Testsignals (utu, utv, utw).

2. Verfahren nach Anspruch 1, **dadurch gekennzeichnet, dass**
- das Nachführen der Drehwinkelstellung (DW) ausgehend von der berechneten initialen Drehwinkelstellung (DW) unter Verwendung des mindestens einen kontinuierlichen Testsignals (utu, utv, utw) folgende Schritte aufweist:
- Einspeisen von kontinuierlichen Testsignalen (utu, utv, utw) in den Stator (4) des bürstenlosen Gleichstrommotors (2),
- Ermitteln von Antwortsignalen (itu, itv, itw), die sich in Abhängigkeit von den kontinuierlichen Testsignalen (utu, utv, utw) einstellen, und
- Bestimmen der Drehwinkelstellung (DW) des Rotors (3) in Abhängigkeit von den kontinuierlichen Testsignalen (utu, utv, utw) und den Antwortsignalen (itu, itv, itw),

3. Verfahren nach einem der vorhergehenden Ansprüche, **dadurch gekennzeichnet, dass**
- falls die induzierte Spannung gleich groß ist wie der Schwellenwert oder größer ist als der Schwellenwert, folgender Schritt durchgeführt wird:
- Berechnen der Drehwinkelstellung (DW) des Rotors (3) in Abhängigkeit von der im Stator (4) induzierten Spannung.

4. Verfahren nach einem der vorhergehenden Ansprüche, **dadurch gekennzeichnet, dass**
- das Berechnen der Drehwinkelstellung (DW) des Rotors (3) basierend auf der Indirekten Flussermittlung durch Online Reaktanz Messung (INFORM) und das Nachführen der Drehwinkelstellung (DW) ausgehend von der berechneten initialen Drehwinkelstellung (DW) unter Verwendung des mindestens einen kontinuierlichen Testsignals (utu, utv, utw) bis zu einer Schwellendrehzahl durchgeführt wird, wobei die Schwellendrehzahl in einem Bereich zwischen 18 % und 22 % der Nenndrehzahl des bürstenlosen Gleichstrommotors (2) liegt.

5. Handgetragenes Werkzeug (1), aufweisend:
- einen bürstenlosen Gleichstrommotor (2) und
- eine Motorsteuervorrichtung (5) zur Ansteuerung des bürstenlosen Gleichstrommotors (2), wobei die Motorsteuervorrichtung (5) dazu ausgebildet ist, ein Verfahren nach einem der vorhergehenden Ansprüche auszuführen.
